# EUROPEAN PATENT APPLICATION

(11) **EP 2 701 000 A1**
(43) Date of publication of application: **26.02.2014**
(21) Application number: 13174796.6
(22) Date of filing: 02.07.2013
(51) Int. Cl.: G02F 1/1335, G02F 1/1341

(54) **Display device, color filter substrate and method for manufacturing the same**

(30) Priority: 24.08.2012 CN 201210307202
(71) Applicant: Boe Technology Group Co. Ltd., Beijing 100015 (CN)
(72) Inventor: Niu, Jing, 100176 Beijing (CN)
(74) Representative: Metzler, Volker

(57) **Abstract**

A color filter substrate includes a plurality of RGB color filters (103) in spaces (104) formed in a black matrix (102) on a substrate (101), wherein recesses (1021) are provided in regions of the black matrix between color filters (103) of a same color (R) , whereby the recesses (1021) allow intercommunication between adjacent spaces (1041,1042,1044) when filling color photoresist during manufacturing.

## Description

### FIELD OF THE INVENTION

Embodiments of the present invention relate to a display device, a color filter substrate and a method for manufacturing the same.

### BACKGROUND

A color filter substrate is a key component for colorizing a liquid crystal display device. Among manufacturing processes of the color filter substrate, an ink-jet printing method does not need a vacuum equipment with multiple cavities, and has advantages of simple process and low cost, and thus it has become a main way for manufacturing process of the color film substrate gradually.

In an ink-jet printing process, formation of the color filter substrate is achieved by spraying color photoresist on a substrate, which has already had black matrices, with nozzles, and multiple ordered recessed spaces are defined between the black matrices, for the purpose of receiving the color photoresist to form color filters. During the process, owing to the abnormity of an individual nozzle, the amount of ink sprayed at the location of some color filters being uneven is liable to occur, and in turn, this leads to unevenness in thickness of individual color filters that are formed. Even more seriously, when the amount of ink sprayed at the location of some color filters is overlarge, color photoresist will overflow to the location of a color filter that is adjacent to it but has a different color, so that a region where photoresist materials of two kinds of color overlap is formed, and upon liquid crystal display, an abnormal phenomenon of color mixing and the like will occur in this region.

### SUMMARY

One of objects of embodiments of the present invention is to provide a display device, a color filter substrate and a method for manufacturing the same, for avoiding a color mixing phenomenon.

According to an embodiment of the invention, there is provided a color filter substrate, including a substrate and a black matrix and a plurality of color filters that are disposed on the substrate, a plurality of spaces for receiving the plurality of color filters 103 being defined by the black matrix, wherein, on a region of the black matrix between spaces for receiving color filters of the same color, there is provided a recess; and the recess allows intercommunication of the spaces for receiving color filters of the same color.

According to another embodiment of the invention, there is provided a display device, including the color filter substrate provided by the embodiment of the invention.

According to still another embodiment of the invention, there is provided a manufacturing method of the color filter substrate provided by the embodiment of the invention, comprising:

Step 1, a substrate is provided;

Step 2: a black matrix, which defines a plurality of spaces and has a recess provided, is formed on the substrate through a patterning process, the plurality of spaces serving to receive a plurality of color filters, and the recess being provided on a region of the black matrix between spaces for receiving color filters of the same color and allowing intercommunication of the spaces for receiving color filters of the same color;

Step 3; a plurality of color filters are formed on the plurality of spaces defined by the black matrix.

Regarding the display device, color filter substrate and the manufacturing method thereof provided by embodiments of the invention, the recess is provided on a region of the black matrix between spaces for receiving color filters in the same color, and allows intercommunication of the spaces for receiving color filters in the same color, so that color photoresist that is sprayed too much in a space due to abnormity of a nozzle overflows to a space for receiving a color filter of the same color through the recess. Thus, overmuch color photoresist is avoided from flowing into a space for receiving a color filter of a different color, and uniform allocation of the color filter in multiple spaces is achieved. In turn, a display problem such as color mixing or the like is avoided. Furthermore, as spaces for receiving color filters of the same color can be intercommunicated by the recess designed by the invention, when overmuch color photoresist is sprayed in a certain space, the redundant color photoresist can flow into other space for receiving a color filter of the same color. Thus, the formed color filters have uniform thickness, and the display effect is improved further.

### BRIEF DESCRIPTION OF THE DRAWINGS

In order to illustrate the technical solution of the embodiments of the invention more clearly, the drawings of the embodiments will be briefly described below; it is obvious that the drawings as described below are only related to some embodiments of the invention, but not limitative of the invention.

FIG. 1 is a plan view showing a color filter substrate provided by an embodiment of the invention;

FIGs. 2a, 2b and 2c are cross-sectional view showing the color filter substrate in FIG. 1 taken along A-A;

FIG. 3 is a plan view showing a color filter substrate provided by another embodiment of the invention;

FIG. 4 is a plan view showing a color filter substrate provided by still another embodiment of the invention;

FIGs. 5a-5e are schematic views showing various steps of a manufacturing method of a color filter substrate according to an embodiment of the invention.

### DETAILED DESCRIPTION

In order to make objects, technical details and advantages of the embodiments of the invention apparent, hereinafter, the technical solutions of the embodiments of the invention will be described in a clearly and fully understandable way in connection with the drawings related to the embodiments of the invention. It is obvious that the described embodiments are just a part but not all of the embodiments of the invention. Based on the described embodiments of the invention, those ordinarily skilled in the art can obtain other embodiment(s), without any inventive work, which come(s) within the scope sought for protection by the invention.

Hereinafter, a display device, a color filter substrate and a method for manufacturing the same provided by embodiments of the invention will be described in detail in combination with accompanied drawings.

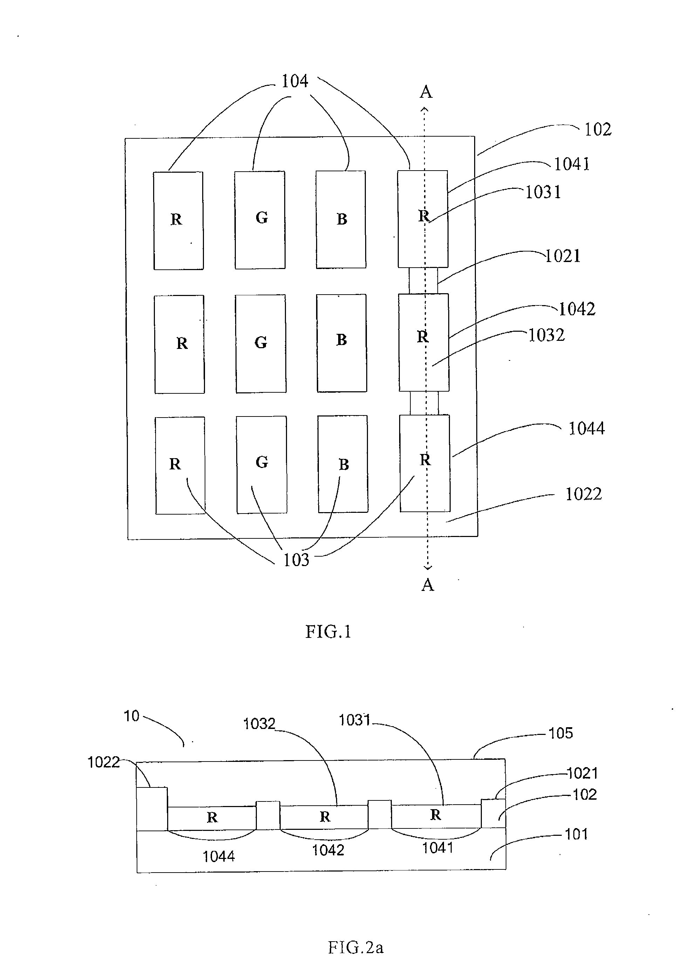

According to an embodiment of the invention, there is provided a color filter substrate 10. As shown in FIG. 1, FIG. 2a and FIG. 3, it includes a substrate 101 and a black matrix 102 and a plurality of color filters 103 that are disposed on the substrate 101, and a plurality of spaces 104 for receiving the plurality of color filters 103 are defined by the black matrix 102, wherein, each of the spaces 104 receives one color filter 103 in correspondence. For example, as shown in FIG. 1, a space 1041 receives a color filter 1031 in red (denoted as R in the figure), and a space 1042 receives a color filter 1032 in red. It is to be noted that, for the sake of briefness and convenience, only a part of the color filter substrate 10 is shown in FIG. 1, FIG. 2a and FIG. 3.

For example, the black matrix 102 adopts a material for separating color filters of the same color or different colors, and is usually formed to be a grid structure, mesh portions of which are areas for receiving the color filters (namely, the spaces 104 as stated above).

Further, on regions of the black matrix between spaces 104 for receiving color filters 103 of the same color, there are provided recesses 1021. The thickness of the black matrix at the recesses 1021 is smaller than the thickness at other regions 1022 except the recesses 1021 on the black matrix 102 (e.g. a region of the black matrix at the border location of the substrate 102 and regions of the black matrix between color filters 103 of different colors), so that the spaces 104 for receiving the color filters 103 of the same color are intercommunicated. Specifically, with FIG. 1 as an example, on a region of the black matrix between spaces 1041, 1042 with corresponding red color filters 1031, 1032 received therein, there is provided a recess 1021. Where, the red color filters are merely given as an example, color filters in green, blue or other colors may also be possible.

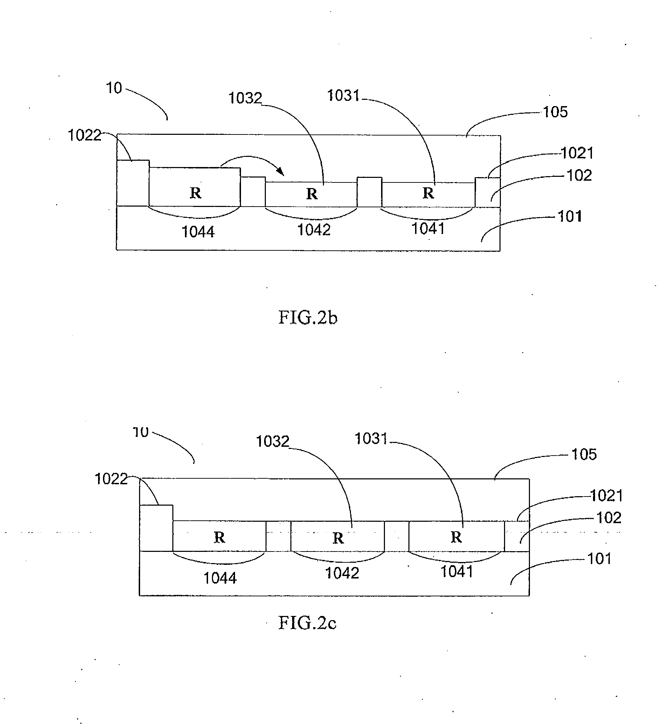

As shown in FIG. 2b, in the course of forming color filters by way of ink-jet printing, color photoresist that is sprayed in a space 1044 too much due to abnormity of a nozzle overflows into the space 1042 that receives the color filter 1032 of the same color through the recess 1021, so that thicknesses of color filters in the spaces 1044, 1042 that are intercommunicated by the recess 1021 tend to be uniform, as shown in FIG. 2c.

On the black matrix 102, there is provided at least one recess 1021 for allowing spaces for receiving color filters of the same color to be intercommunicated. Preferably, it is possible that one recess 1021 is provided on a region of the black matrix between every two adjacent spaces 104 for receiving color filters 103 of the same color, so that thicknesses of color filters of the same color on the entire color filter substrate 10 tend to be uniform. Certainly, embodiments of the invention do not make a limitation of this, and recesses 1021 in a suitable number can be set by those skilled in the art according to common knowledge or commonly used technical means.

As can be understood, regarding the relative position of spaces 104 for color filters of the same color that are intercommunicated by a recess 1021 and overall arrangement mode of the plurality of spaces 104 on the color filter substrate 10, embodiments of the invention do not set a concrete limit on each of them. Contents shown in FIG. 1 to FIG. 3 are merely for exemplary description, and they can be set as being in other specific forms by those skilled in the art according to common knowledge or commonly used technical means.

Further, except the above black matrix 102 and the color filters 103, other element layer may further be provided on the color filter substrate 10. Optionally, as shown in FIG. 2a, an Over Coat (OC) 105 is provided on the color filter substrate 10. Embodiments of the invention do not make a limitation of this, and other elements, such as a conductive layer (e.g. a layer of indium tin oxide), etc. can be provided by those skilled in the art according to common knowledge or commonly used technical means.

As regards the color filter substrate provided by embodiments of the invention, on regions of the black matrix between spaces 104 for receiving color filters 103 of the same color, there are provided recesses 1021 for allowing the spaces 104 for receiving the color filters 103 of the same color (such as, spaces 1044 and 1042 in FIG. 2a) to be intercommunicated. As such, in the course of forming the color filters 103 by way of ink-jet printing, color photoresist that is sprayed in the space 1044 too much due to abnormity of a nozzle is made to overflow into the space 1042 that receives a color filter of the same color through the recess 1021, so that overmuch color filter is prevented from flowing into a space for receiving a color filter of a different color, and uniform allocation of the color filter in multiple spaces is achieved. Thus, a display problem such as color mixing or the like is avoided. Moreover, because spaces for receiving color filters of the same color can be intercommunicated through a recess designed by the invention, when overmuch color filter is sprayed in a certain space, the redundant color filter can flow into other space for receiving a color filter of the same color through the recess. Thereby, the display effect is improved further.

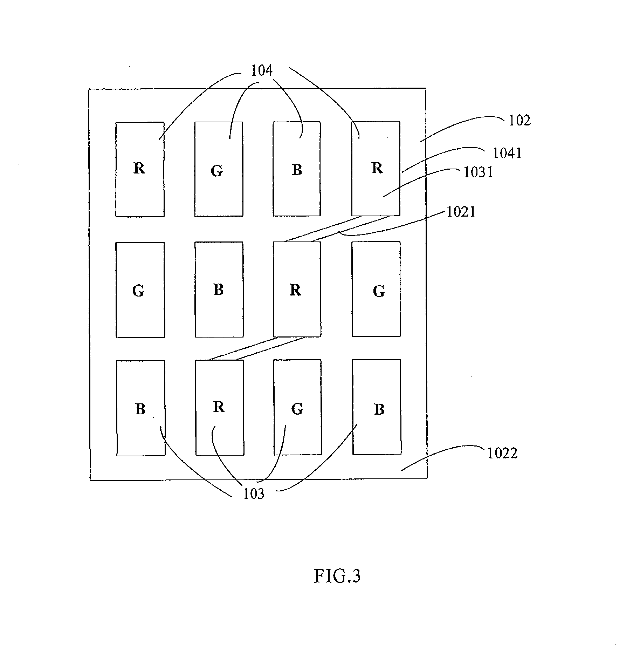

In an embodiment provided by the invention, as shown in FIG. 1 and FIG. 3, on regions of the black matrix between spaces 104 that are adjacent or next to each other and serve to receive color filters 103 of the same color, there are provided recesses 1021, so as to decrease the length of the recesses 1021 as far as possible, and simplify the manufacturing process of the color filter substrate 10. Of course, in other embodiment provided by the invention, recesses are further provided on regions of the black matrix between spaces for receiving color filters of the same color that have other positional relationship. For example, two spaces that are intercommunicated by a recess are not adjacent, but are separated with a number of other spaces.

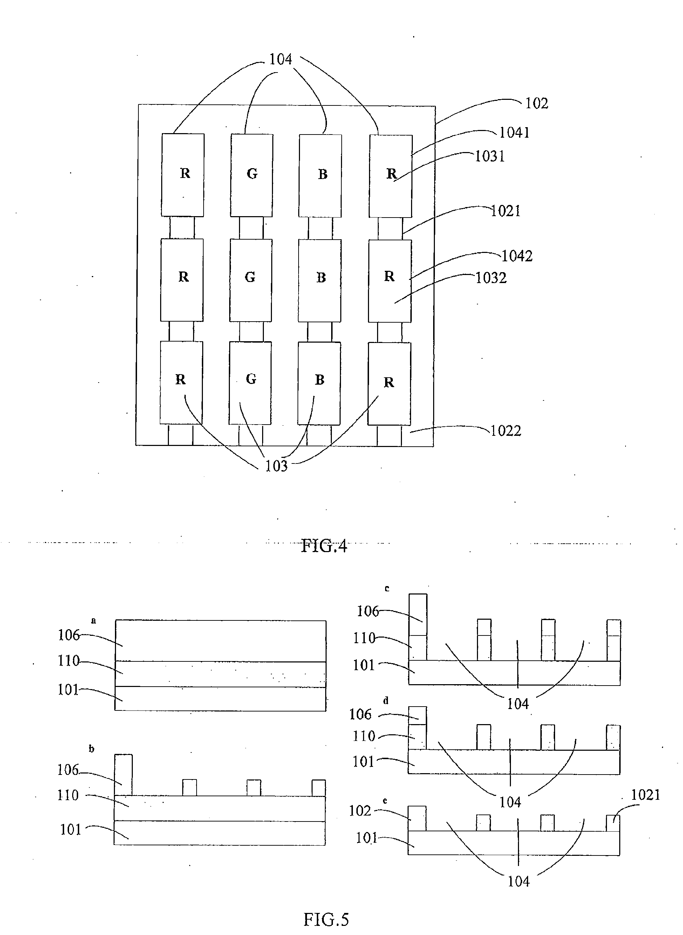

In another embodiment provided by the invention, as shown in FIG. 4, a plurality of spaces 104 are arranged in the form of an array, and spaces 104 in each column of the array receive color filters 103 of the same color. In left-to-right order, a first column of the plurality of spaces 104 that are arranged in the form of the array receives red (denoted by R in the figure) color filters, a second column receives green (denoted by G in the figure) color filters, and a third column receives blue (denoted by B in the figure) color filters. Then as shown in FIG. 4, the recesses 1021 are disposed on regions of a black matrix between spaces 104 in each column of the array. The length of the recesses 1021 formed as such is shortest, and manufacturing process of a color filter substrate 10 is simplified. Of course, in other embodiment provided by the invention, a plurality of spaces on the substrate 10 may adopt other arrangement modes as well. For example, the plurality of spaces 104 are arranged in the form of an array, and the color of color filters in each column is not of the same kind completely. Color filters in each row of the array and color filters of the same color in an adjacent row are staggered at a distance of one to two locations. As shown in FIG. 3, colors of color filters in a first row as shown are red (R), green (G), blue (B) and red (R) in sequence, and colors of color filters in a second row are green (G), blue (B), red (R) and green (G) in sequence. Then the recesses 1021 can be disposed between the first row and the second row of the space array obliquely.

In still another embodiment provided by the invention, the recesses 1021 are disposed in the medium positions of regions of the black matrix between spaces for receiving color filters of the same color, as shown in FIG. 1 and FIG. s. Color photoresist firstly flows to a medium position of the space 104 into which it will flow via a recess 1021, and then spreads toward two flanks of the space 104 gradually, so that the color photoresist can be distributed uniformly in the space 104 as fast as possible before it is solidified. For example, in a plan view parallel to a surface of the substrate, spaces for receiving color filters have the shape of a rectangle, the recesses adjoin respective ones of sides of the rectangle-shaped spaces, and an adj oining portion is located at the medium position of the side. However, the embodiments of the invention are not limited to the rectangle shape, and a parallelogram or a square shape or any other suitable shapes can also be employed. The recesses 1021 configured as such make thicknesses of the formed color filters more uniform, to thereby improve the display effect.

In yet still another embodiment provided by the invention, width of the recesses is 1/3 to 4/5 of width of the spaces. With a suitable space width, fluency in flowing of color filters is ensured, and the manufacturing process is simplified. For example, width of a recess is 1/3 to 4/5 of length of a side of a space that adjoins the recess.

In further still another embodiment provided by the invention, width of the recesses is 1/4 to 1/2 of depth of the spaces (namely, thickness of a portion of the black matrix except the recess region). With a suitable space depth, fluency in flowing of color filters is ensured, and the manufacturing process is simplified.

In correspondence with the color filter substrate provided by embodiments of the invention, an embodiment of the invention further provides a display device, which includes the color filter substrate provided by embodiments of the invention. The display device may be: a liquid crystal panel, a cell phone, a tablet computer, a television, a display, a notebook computer, a digital photo frame, a navigator or any other product or component having a display function.

Regarding the liquid crystal panel provided by the embodiment of the invention, because the color filter substrate provided by embodiments of the invention is employed, it possesses color filters with uniform thickness. And, a color mixing phenomenon between color filters of different colors is avoided, so that the display effect can be improved further.

In correspondence with the color filter substrate provided by embodiments of the invention, an embodiment of the invention further provides a manufacturing method of the color filter substrate, comprising:

Step 1: a substrate is provided;

The substrate is such as a substrate of glass, quartz or a transparent resin, and the substrate is subjected to a cleaning process for use. Of course, embodiments of the invention do not make a limitation of this, and a substrate of other type can be selected by those skilled in the art according to common knowledge or commonly used technical means.

Step 2: a black matrix, which defines a plurality of spaces and has a recess provided, is formed on the substrate through a patterning process, the plurality of spaces serve to receive a plurality of color filters, and the recess is provided on a region of the black matrix between spaces for receiving color filters of the same color and allows intercommunication of the spaces for receiving color filters of the same color;

In this step, the plurality of spaces and the recess are formed through the patterning process. Where, material for forming the black matrix may be a black resin, and may also be molybdenum, chromium, aluminum or other metal. Embodiments of the invention do not make a limitation of this.

Step 3: a plurality of color filters are formed in the plurality of spaces defined by the black matrix.

Preferably, in this step, color photoresist is sprayed into the plurality of spaces of the black matrix that has been formed to have the recess by means of ink-jet printing, so as to form the plurality of color filters. In this step, when abnormity happens to an individual nozzle and this results in the fact that the amount of ink sprayed in some spaces for the color photoresist is uneven, for example, overlarge or too small, color photoresist in a space with a greater amount of ink sprayed can flow into other space in which color photoresist of the same color is sprayed through the recess. For example, as shown in FIG. 2b, the amount of ink sprayed at a space 1044 is overlarge, and it flows into a space 1042 that is intercommunicated with it through a recess. The color photoresist in the space 1042 may flow into a space 1041 through a recess further. Eventually, as shown in FIG. 2c, the amount of the color photoresist in each of spaces 1041, 1042 and 1044 tends to be uniform, so that the formed color filters are uniform in thickness.

In the manufacturing method of the color filter substrate provided by the embodiment of the invention, the black matrix, which defines a plurality of spaces and has a recess provided, is formed on the substrate through a patterning process, the plurality of spaces serving to receive a plurality of color filters, and the recess being provided on a region of the black matrix between spaces for receiving color filters of the same color and allowing intercommunication of the spaces for receiving color filters of the same color, so that color photoresist that is sprayed too much in a space due to abnormity of a nozzle overflows to a space for receiving a color filter of the same color through the recess. Thus, overmuch color photoresist is avoided from flowing into a space for receiving a color filter of a different color, and uniform allocation of the color filter in multiple spaces is achieved. In turn, a display problem such as color mixing or the like is avoided. Furthermore, as spaces for receiving color filters of the same color can be intercommunicated by the recess designed by the invention, when overmuch color photoresist is sprayed in a certain space, the redundant color photoresist can flow into other space for receiving a color filter of the same color. Thus, the formed color filters have uniform thickness, and the display effect is improved further.

In another embodiment provided by the invention, a metallic material is used for manufacture of the black matrix that defines a plurality of spaces and has a recess provided, the step 2 specifically includes:

21, a metal layer is formed on the substrate;

For example, a metal layer 110 is formed on the substrate 101 by way of sputtering with molybdenum, chromium, aluminum or other metallic material, as shown in FIG. 5a.

22, photoresist is applied on the metal layer;

As shown in FIG. 5a, which is a schematic view showing the substrate 101 on which the metal layer 110 and photoresist 106 are formed.

23, the photoresist is subjected to exposure with a half-tone or gray-tone mask;

In this step, with the use of the half-tone or gray-tone mask, the amount of exposure at different locations of the photoresist is controlled, so that the photoresist is exposed with different exposure extent in different regions.

24, the exposed photoresist is developed, so that the photoresist in a space region for receiving color filters is fully removed after development, the photoresist in a black matrix region is fully retained after development, and the photoresist in a recess region is partially retained after development;

In this step, development is conducted on the photoresist, so as to remove all of the photoresist in the space region for receiving color filters and a part of photoresist in the recess region, and retain all of the photoresist in the black matrix region. Thereby, the remaining photoresist is made to have two different thicknesses.

In this step, as shown in FIG. 5b, all of the photoresist in the space region for receiving color filters are removed through an exposure process and a development process, and the metal layer that is covered by the photoresist in the space region for receiving color filters corresponds to the plurality of spaces 104 in FIG. 2a. In this step, a part of photoresist in the recess region is also removed, and the metal layer that is covered by the photoresist in the recess region corresponds to the recesses 1021 in FIG. 2a. In this step, the photoresist in the black matrix region is fully retained after development, and the metal layer that is covered by the photoresist in the black matrix region corresponds to other region 1022 on the black matrix 102 except the recesses 1021 in FIG. 2a. The photoresist remained fmally has two different thicknesses, wherein, the metal layer that is covered by the photoresist has a smaller thickness corresponds to the recesses 1021 in FIG. 2a, and the metal layer that is covered by the photoresist has a larger thickness corresponds to the other region 1022 on the black matrix 102 except the recesses 1021 in FIG. 2a.

25, the metal layer is etched, so that the metal layer in the space region for receiving color filters is removed and a plurality of spaces are formed;

As shown in FIG. 5c, a plurality of spaces 104 are formed on the substrate.

26, ashing is performed on the remaining photoresist, so as to remove the photoresist in the recess region;

In this step, photoresist on top is ashed, so as to remove the remaining photoresist with a smaller thickness, i.e, the photoresist in the recess region, and to leave the remaining photoresist with a larger thickness.

As shown in FIG. 5d, the photoresist on the metal layer 110 that corresponds to the recesses 1021 in FIG. 2a and has a smaller thickness is removed, for performance of subsequent etching process.

27, the metal layer with the plurality of spaces formed therein is etched, so that the metal layer in the recess region is partially removed and a recess is formed;

In this step, the metal layer exposed by the region where the photoresist has been ashed is etched, so that the metal layer in the recess region is partially removed and recesses are formed.

28, the remaining photoresist is stripped off, so as to form the black matrix that defines a plurality of spaces and has a recess provided.

As shown in FIG. 5e, a black matrix 102 that has the plurality of spaces 104 and a plurality of recesses 1021 is formed on the substrate.

In another embodiment provided by the invention, a black resin material is used for manufacture of the black matrix that defines a plurality of spaces and has a recess provided, the step 2 specifically includes:

31, a black resin layer is formed on the substrate;

32, an exposure is conducted on the black resin layer with a half-tone or gray-tone mask;

33, the exposed black resin layer is developed, so that the black resin layer in a space region for receiving color filters is fully removed after development, the black resin layer in a black matrix region is fully retained after development, and the black resin layer in a recess region is partially retained after development. Thus, the black matrix that defines a plurality of spaces and has a recess provided is formed.

The step 2 of the manufacturing method of the color filter substrate provided by the embodiment is similar to the portion in the steps 22-24 in the above embodiment, and it will not be described in detail any more.

Descriptions made above are merely specific embodiments of the invention, but the protection scope of the invention is not limited thereto. All changes or replacements, as would be conceived by those skilled in the art easily within the technical scope disclosed by the invention, shall fall into the protection scope of the invention. Thus, the protection scope of the invention shall be defined by the protection scope of attached claims.

## Claims

1. A color filter substrate, comprising a substrate and a black matrix and a plurality of color filters that are disposed on the substrate, a plurality of spaces for receiving the plurality of color filters being defined by the black matrix, wherein,
on a region of the black matrix between spaces for receiving color filters of the same color, there is provided a recess;
the recess allows intercommunication of the spaces for receiving color filters of the same color.

2. The color filter substrate according to claim 1, wherein, on a region of the black matrix between spaces that are adjacent or next to each other and serve to receive color filters of the same color, there is provided a recess.

3. The color filter substrate according to claim 1, wherein,
the plurality of spaces are arranged in the form of an array, and spaces in each column of the array serve to receive color filters of the same color;
the recess is provided on a region of the black matrix between spaces on each column of the array.

4. The color filter substrate according to any of claims 1 to 3, wherein, in a plan view parallel to a surface of the substrate, the recess adjoins a side of the space, and the adjoining portion is located in the medium position of the side.

5. The color filter substrate according to claim 4, wherein, width of the recess is 1/3 to 4/5 of length of the side of the space that adjoining the recess.

6. The color filter substrate according to any of claims 1 to 5, wherein, depth of the recess is 1/4 to 1/2 of thickness of the black matrix.

7. A display device, comprising the color filter substrate according to any of claims 1 to 6.

8. A manufacturing method of a color filter substrate, comprising:
step 1: providing a substrate;
step 2: forming a black matrix, which defines a plurality of spaces and has a recess provided, on the substrate through a patterning process, the plurality of spaces serving to receive a plurality of color filters, and the recess being provided on a region of the black matrix between spaces for receiving color filters of the same color and allowing intercommunication of the spaces for receiving color filters of the same color;
step 3: forming a plurality of color filters in the plurality of spaces defined by the black matrix.

9. The manufacturing method of the color filter substrate according to claim 8, wherein, the step 2 comprises:
forming a metal layer on the substrate;
applying photoresist on the metal layer;
performing an exposure on the photoresist with a half-tone or gray-tone mask;
conducting a development on the exposed photoresist, so that the photoresist in a space region for receiving color filters is fully removed after the development, the photoresist in a recess region is partially retained after the development, and the photoresist in a region of the black matrix except a portion where the recess is to be provided is fully retained after the development;
etching the metal layer, so that the metal layer in the space region for receiving color filters is removed;
performing ashing on the remaining photoresist, so that the photoresist in the recess region is removed and the photoresist in the region of the black matrix except the portion where the recess is to be provided is thinned;
etching the metal layer with the plurality of spaces formed therein, so that the metal layer in the recess region is partially removed and the recess is formed;
stripping off the remaining photoresist, so as to form the black matrix that defines the plurality of spaces and has the recess provided.

10. The manufacturing method of the color filter substrate according to claim 8, wherein, the step 2 comprises:
forming a black resin layer on the substrate;
conducting an exposure on the black resin layer with a half-tone or gray-tone mask;
performing a development on the exposed black resin layer, so that the black resin layer in a space region for receiving color filters is fully removed after the development, the black resin layer in a recess region is partially retained after the development, and the black resin layer in a region of the black matrix except a portion where the recess is provided is fully retained after the development, and thus, the black matrix that defines the plurality of spaces and has the recess provided is formed.

11. The manufacturing method of the color filter substrate according to any of claims 8 to 10, wherein, depth of the recess is 1/4 to 1/2 of thickness of the black matrix.

12. The manufacturing method of the color filter substrate according to any of claims 8 to 11, wherein, the step 3 comprises spraying color photoresist into the plurality of spaces by way of ink-jet printing.
